# NEUE EUROPÄISCHE PATENTSCHRIFT

(11) **EP 1 619 568 B2**
(45) Veröffentlichungstag und Bekanntmachung des Hinweises auf die Entscheidung über den Einspruch: **25.09.2024**
(45) Hinweis auf die Patenterteilung: 11.06.2014
(21) Anmeldenummer: 05008741.0
(22) Anmeldetag: 21.04.2005
(51) Int. Cl.: G05D 23/13, F01P 7/16, G05D 23/02

(54) **Thermostatventil**
Thermostatic valve
clapet thermostatique

(30) Priorität: 21.07.2004 DE 102004035344
(43) Veröffentlichungstag der Anmeldung: 25.01.2006
(73) Patentinhaber: Thermal Management Solutions DE Oberboihingen GmbH, 72644 Oberboihingen (DE)
(72) Erfinder: Gebauer, Markus, 70563 Stuttgart (DE)
(74) Vertreter: Twelmeier Mommer & Partner

(56) Entgegenhaltungen:
- EP-A1- 0 235 472
- EP-A1- 1 195 671
- WO-A1-99/24701
- DE-A1- 4 410 249
- DE-U1- 9 407 641
- US-B1- 6 742 716

## Beschreibung

Die Erfindung bezieht sich auf ein Thermostatventil zur Regelung der Temperatur der Kühlflüssigkeit einer Brennkraftmaschine, insbesondere eines Kraftfahrzeugmotors, der im Oberbegriff des Anspruchs 1 genannten Art.

Ein bekanntes Thermostatventil dieser Art (DE 295 02 097 U) hat sich bewährt. Der Erfindung liegt die Aufgabe zugrunde, ein Thermostatventil dieser eingangs genannten Art so auszubilden, dass eine einfache und kostengünstige Bypasssteuerung und dadurch ein einfaches und kostengünstiges Thermostatventil erreicht wird.

Es ist ein Thermostatventil bekannt (US 6 742 716 B1), das zur Regelung der Temperatur der Kühlflüssigkeit einer Brennkraftmaschine, insbesondere eines Kraftfahrzeugmotors, dient und den Kühlmittelfluss von der Brennkraftmaschine durch einen Bypass und/oder durch einen Wärmeaustauscher zurück zur Brennkraftmaschine regelt. Das Thermostatventil weist ein Ventilgehäuse mit einer Ventilkammer und darin ein thermostatisches Betätigungselement auf, bei dem ein in einem Gehäuse eingeschlossener, sich bei Erwärmung ausdehnender Dehnstoff einen Kolben verschiebt. Das Betätigungselement ist mit einem einzigen Ventilverschlussglied verbunden, das bei einer Relativbewegung zwischen dem Gehäuse und dem Kolben des Betätigungselements verschiebbar ist. Je nach Position des Ventilverschlussgliedes steuert dieses den Kühlmittelfluss von der Brennkraftmaschine über einen Bypass zurück zur Brennkraftmaschine und/oder durch einen Kühler zurück zur Brennkraftmaschine. Das einzige Ventilverschlussglied besteht aus einer rohrförmigen zylindrischen Schieberhülse, die an beiden axialen Enden für den Durchlass des Kühlmittels geöffnet ist und an beiden axialen Enden Ventilflächen aufweist, denen im Inneren des Ventilgehäuses ringförmige, axiale Ventilsitzflächen zugeordnet sind, auf denen das Ventilverschlussglied mit der jeweiligen axialen ringförmigen Ventilfläche aufsitzen kann. Die Schieberhülse ist endseitig mittels einer ringförmigen Ventildichtung in Bezug auf das Ventilgehäuse radial abgedichtet. In einer Endstellung, die einem Bypassbetrieb entspricht, sitzt das Ventilverschlussglied mit einem Ende mit der dortigen ringförmigen Ventilfläche axial auf der zugeordneten Ventilsitzfläche auf. Dabei ist durch das Innere des Schieberhülsenventils hindurch ein Kühlmittelfluss von der Brennkraftmaschine über den Bypass zur Brennkraftmaschine zurück möglich, während der Zufluss zum Kühler gesperrt ist. In einer anderen axialen Endstellung, bei der die andere endseitige Ventilfläche der Schieberhülse axial auf der zugeordneten Ventilsitzfläche aufsitzt, ist ein Kühlerbetrieb möglich mit Kühlmittelfluss von der Brennkraftmaschine durch die Ventilkammer zum Kühler und zurück zur Brennkraftmaschine. Ein Bypassfluss ist gesperrt. In einer Zwischenstellung der Schieberhülse zwischen beiden Ventilsitzflächen ist ein Kühlmittelfluss von der Brennkraftmaschine zum Teil über den Bypass und zum Teil zum Kühler möglich.

Aus der WO 99/24701 ist ein Thermostatventil bekannt, das ebenfalls ein einziges Ventilverschlussglied aufweist, das ebenfalls als zylindrisches Schieberhülsenventil ausgebildet ist, das etwa rohrförmig und durchgängig im Inneren ist und an beiden gegenüberliegenden Enden offen ist und mit dortigen Ventilsitzen im Ventilgehäuse befindliche ringförmige Ventilsitzflächen durch axiales Aufsitzen darauf steuert.

Diese Aufgabe ist bei einem Thermostatventil der eingangs genannten Art gemäß der Erfindung durch die Merkmale im Anspruch 1 gelöst. Ein solches Thermostatventil mit entsprechender Bypasssteuerung ist einfach, kompakt und kostengünstig und ermöglicht eine besonders einfache und damit kostengünstige Herstellung. Ferner ist eine Bauoptimierung erreichbar, da das Thermostatventil nur eine geringe Bauhöhe erfordert. Zugleich sind die Strömungsverhältnisse verbessert und die Festigkeit und damit die Lebensdauer gesteigert. Von Vorteil ist ferner, dass die Betriebssicherheit des Thermostatventils dadurch erhöht ist.

Weitere vorteilhafte Merkmale der Erfindung und Ausgestaltungen dazu ergeben sich aus den Ansprüchen 2 bis 34. Das Thermostatventil ist betriebssicher, kostengünstig und benötigt nur wenige Bauteile. Die Montage des Thermostatventils ist besonders einfach.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: einen schematischen axialen Längsschnitt mit teilweiser Seitenansicht eines Thermostatventils,
- Fig. 2: einen schematischen Schnitt des Thermostatventils entlang der Linie II-II in Fig. 1,
- Fig. 3: eine Unteransicht des Thermostatventils in Pfeilrichtung III in Fig. 1,

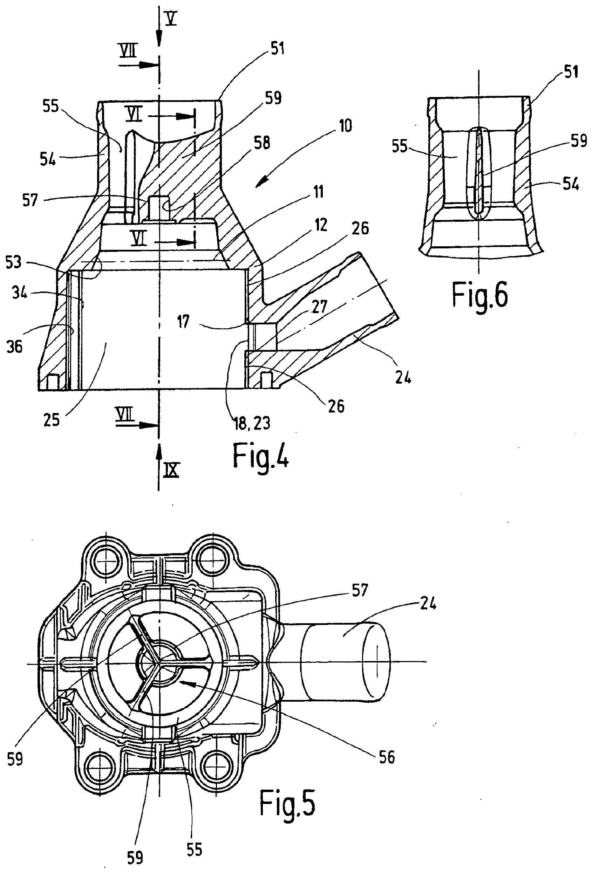

- Fig. 4: einen schematischen Schnitt des Ventilgehäuses des Thermostatventils,
- Fig. 5: eine Draufsicht des Ventilgehäuses in Pfeilrichtung V in Fig. 4,
- Fig. 6: einen schematischen Schnitt einer Einzelheit des Ventilgehäuses entlang der Linie VI-VI in Fig. 5,

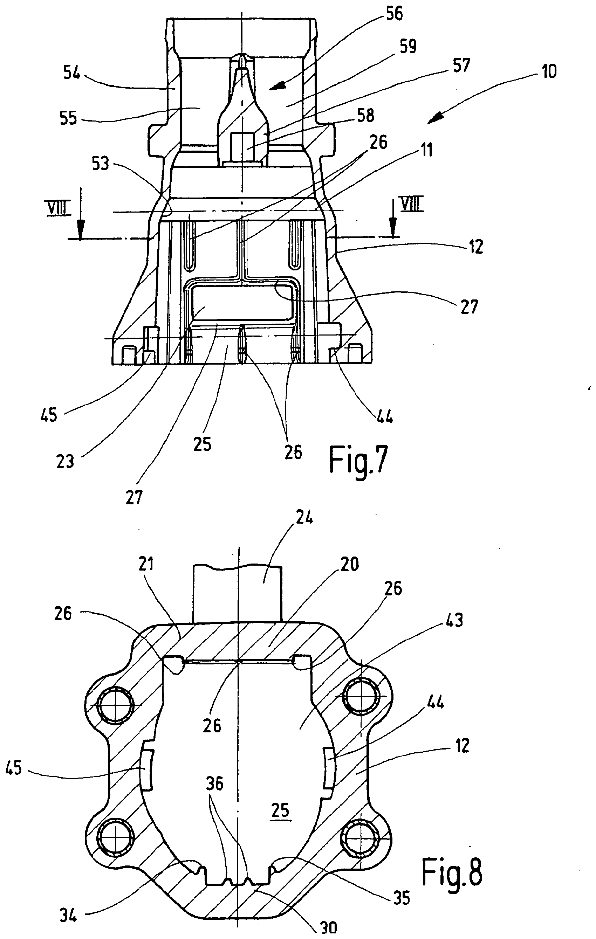

- Fig. 7: eine Seitenansicht mit schematischem Schnitt des Ventilgehäuses in Pfeilrichtung VII-VII in Fig. 4,
- Fig. 8: einen schematischen Schnitt des Ventilgehäuses entlang der Linie VIII-VIII in Fig. 7,
- Fig. 9: eine Unteransicht des Ventilgehäuses in Pfeilrichtung IX in Fig. 4,
- Fig. 10: eine schematische perspektivische Ansicht einer Einzelheit des Thermostatventils in Fig. 1 bis Fig. 3.

In den Zeichnungen ist schematisch ein Thermostatventil 10 gezeigt, das zur Regelung der Temperatur der Kühlflüssigkeit einer nicht weiter gezeigten Brennkraftmaschine, insbesondere eines Kraftfahrzeugmotors, dient. Das Thermostatventil 10 ist hierbei z.B. derart in den Kühlmittelkreislauf impliziert, dass dem Thermostatventil 10 von der Brennkraftmaschine her kommendes Kühlmittel gemäß Pfeil 1 zugeführt wird, wobei das Kühlmittel je nach Ventilstellung gemäß Pfeil 2 zurück zur Brennkraftmaschine und/oder gemäß Pfeil 3 zum Kühler des Kühlkreislaufs oder gegensinnig geführt wird. Das Thermostatventil 10 regelt den Kühlmittelfluss von der Brennkraftmaschine durch einen Bypass und/oder durch einen als Kühler wirksamen Wärmeaustauscher zurück zur Brennkraftmaschine.

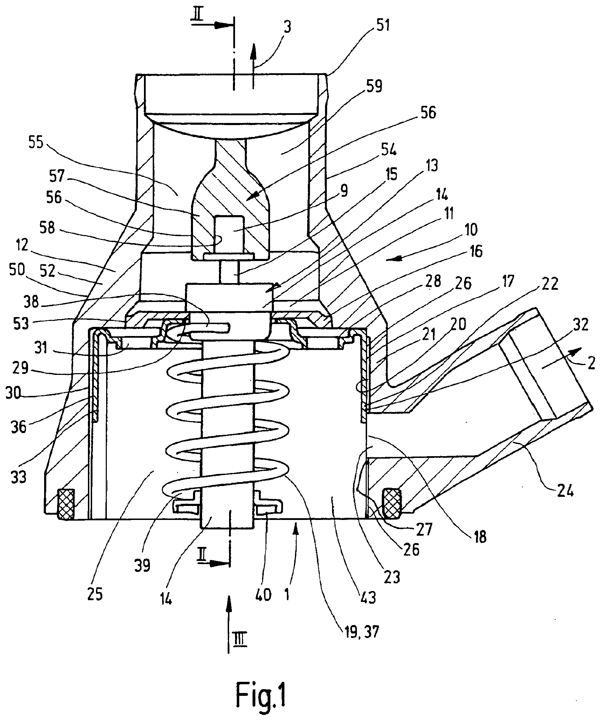

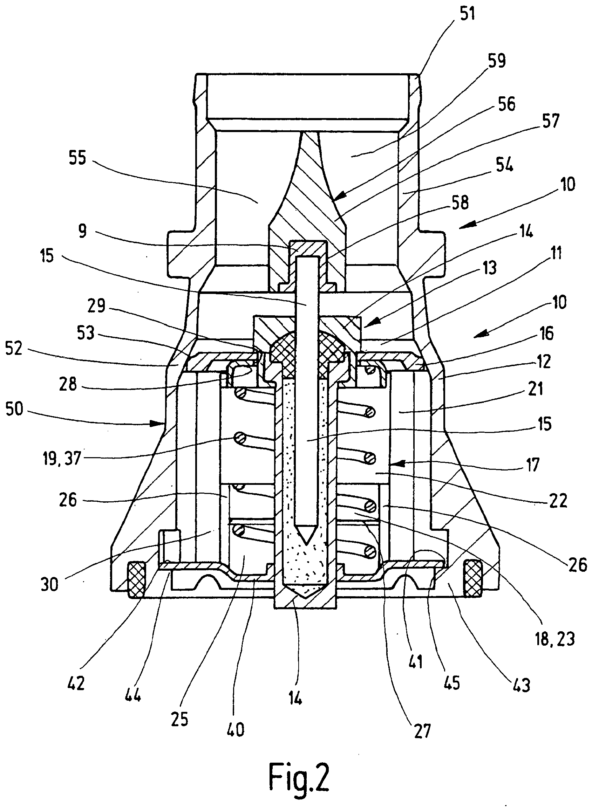

Das Thermostatventil 10 weist ein Ventilgehäuse 12 auf, das beim gezeigten Ausführungsbeispiel vorzugsweise als einstückiges Bauteil gestaltet ist, z.B. als Spritzgießformteil ausgebildet ist, wobei das Ventilgehäuse 12 aus Metall oder vorzugsweise aus Kunststoff besteht. Das Ventilgehäuse 12 enthält einen Ventildurchfluss 11 für den Durchfluss des Kühlmittels von der Zufuhrseite gemäß Pfeil 1 her bis hin zur Abfuhrseite gemäß Pfeil 3. Im Ventilgehäuse 12 ist ein thermostatisches Betätigungselement 13 enthalten, dessen Gehäuse 14 einen sich bei Erwärmung ausdehnenden Dehnstoff, z.B. eine Wachsmischung, enthält. In den Dehnstoff im Gehäuse 14 taucht ein zum Gehäuse 14 etwa koaxialer Kolben 15 ein, der bei Erwärmung des sich ausdehnenden Dehnstoffes verschoben wird. Der Kolben 15 ist in Fig. 1 und Fig. 2 oben aus dem Gehäuse 14 herausgeführt und am Ventilgehäuse 12 axial abgestützt und radial zentriert gehalten.

Das Thermostatventil 10 weist ein erstes Ventilverschlussglied 16 auf, das den Ventildurchfluss 11 beherrscht und bei der Relativbewegung zwischen dem Gehäuse 14 und Kolben 15 verschiebbar ist. Ferner ist ein zweites Ventilverschlussglied 17 vorgesehen, das mit der Relativverschiebung des Gehäuses 14 verschiebbar ist und einer zweiten Ventilöffnung 18 zugeordnet ist, die den Bypass und damit den Kühlmittelfluss in Pfeilrichtung 2 zurück zum Motor steuert. Das Thermostatventil enthält ferner ein einziges Rückstellmittel 19, welches beide Ventilverschlussglieder 16 und 17 beaufschlagt.

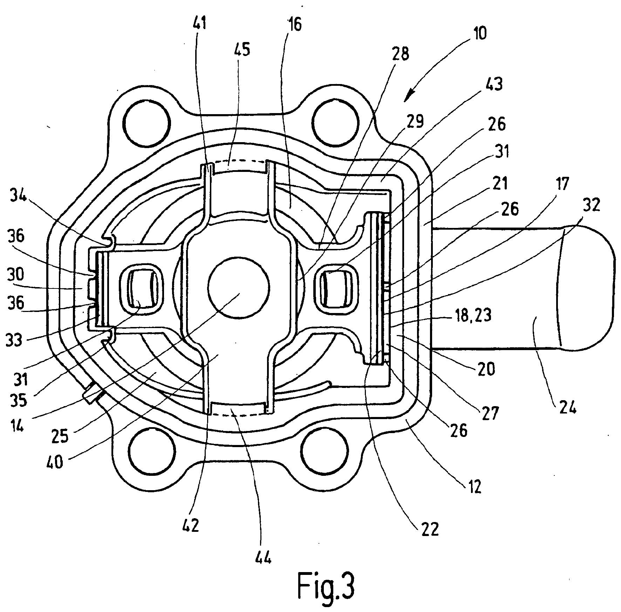

Die zweite Ventilöffnung 18, die dem zweiten Ventilverschlussglied 17 zugeordnet ist, ist in einem z.B. im wesentlichen geradflächigen, d.h. evtl. auch zumindest leicht gebogenen, Wandbereich 20 einer Seitenwand 21 des Ventilgehäuses 12 enthalten, die in der Darstellung gemäß Fig. 1 und Fig. 3 rechts verläuft. Das zweite Ventilverschlussglied 17 ist als zu diesem derart geformten Wandbereich 20 etwa paralleler Flachschieber 22 ausgebildet, der an dem Wandbereich 20 anliegt und längs dieses Wandbereichs 20 zum Öffnen und Verschließen der zweiten Ventilöffnung 18 verschiebbar ist. Die dem Flachschieber 22 zugeordnete Ventilöffnung 18 ist beim gezeigten Ausführungsbeispiel als z.B. im Wesentlichen viereckiges Fenster 23 ausgebildet, kann statt dessen aber auch eine andere Kontur aufweisen, z.B. auch die Kontur eines runden Fensters. Diese Ventilöffnung 18 steht mit einem Anschlussstutzen 24 in Verbindung, der vorzugsweise einstückig mit dem Ventilgehäuse 12 ist. Der Anschlussstutzen 24 ist somit an einer Seite des Ventilgehäuses 12 platziert und verläuft in Bezug auf den Wandbereich 20 unter einem spitzen Winkel schräg von unten nach rechts und oben. Somit sind der Wandbereich 20, die Ventilöffnung 18 darin und der zugeordnete Flachschieber 22 an einer Seite des Thermostatventils 10, insbesondere des Ventilgehäuses 12, angeordnet.

Der die Ventilöffnung 18 enthaltende Wandbereich 20 weist auf seiner Innenseite, die zum Inneren 25 des Ventilgehäuses 12 weist, mehrere in Verschieberichtung des Flachschiebers 22, das heißt in Fig. 1 und Fig. 2 etwa vertikal, verlaufende Längsvorsprünge 26 auf, die z.B. als Stege, Rippen, Leisten od.dergl. ausgebildet sind. An der zum Inneren 25 des Ventilgehäuses 12 weisenden Fläche dieser Längsvorsprünge 26 liegt der Flachschieber 22 an, wobei der Flachschieber 22 bei der Ventilbetätigung entlang diesen Längsvorsprüngen 26 beweglich ist. Der die Ventilöffnung 18 enthaltende Wandbereich 20 weist ferner die Ventilöffnung 18 umrahmende vorstehende Rippen 27 auf, an deren zum Inneren 25 des Ventilgehäuses 12 weisender Fläche der Flachschieber 22 anliegt und entlang beweglich ist. Beim gezeigten Ausführungsbeispiel sind oberhalb und unterhalb der Ventilöffnung 18 drei Längsvorsprünge 26 vorgesehen, wobei die im Bereich beider Enden der Ventilöffnung 18 verlaufenden oberen und unteren Längsvorsprünge 26 auch durchgehend sein können unter Einschluss der entsprechenden beiden Ränder des Fensters 23. Unter Einbeziehung der Rippen 27 ist auch dann die Ventilöffnung 18 mit einem vorstehenden Rippenrahmen umrandet, der eine Anlage für den Flachschieber 22 bilden kann. Aufgrund dieser Gestaltung, insbesondere der Längsvorsprünge 26 und/oder Rippen 27, ergibt sich eine nur relativ kleine Kontaktfläche, auf der der Flachschieber 22 Kontakt hat und bewegt wird und somit eine soweit wie möglich reduzierte Reibung bei der Verschiebung des Flachschiebers 22. Dabei ist die Gefahr einer etwaigen Verschmutzung in diesem Bereich vermieden, da z.B. etwaige Schmutzpartikel, wie Sandkörner od.dgl., ausgeschwemmt werden und ein etwaiges Festfressen des Flachschiebers 22 vermieden ist.

Der Flachschieber 22 ist an einem Halteglied 28 gehalten, das quer zum Flachschieber 22 verläuft und an dessen in Fig. 1 und Fig. 2 oberem Endbereich angreift. Das Halteglied 28 ist am Gehäuse 14 des Betätigungselements 13 und/oder am ersten Ventilverschlussglied 16 unverschieblich oder statt dessen auch verschieblich gehalten. Beim gezeigten Ausführungsbeispiel ist das etwa tellerförmige erste Ventilverschlussglied 16 auf einen oberen Teil des Gehäuses 14 des Betätigungselements 13 aufgesetzt, z.B. aufgepresst, wobei das Ventilverschlussglied 16 mittels einer radial vorspringenden Ringschulter dieses Gehäuses 14 auf der in Fig. 1 und Fig. 2 oberen Seite derart übergriffen wird, dass bei einer Bewegung des Gehäuses 14 relativ zum Kolben 15 das Ventilverschlussglied 16 vom Gehäuse 14 in Fig. 1 und Fig. 2 axial nach unten mitgenommen und bewegt wird. Das Halteglied 28 des Flachschiebers 22 ist unterhalb des ersten Ventilverschlussgliedes 16 angeordnet und wird z.B. bei der Öffnungsbewegung vom Ventilverschlussglied 16 mitgenommen. Das Halteglied 28 enthält im Zentrum einen Durchlass 29, durch den sich das Gehäuse 14 des Betätigungselements 13 mit dem in diesem Bereich befindlichen Teil hindurcherstreckt.

Wie insbesondere aus Fig. 1, 3 und 10 ersichtlich ist, erstreckt sich das Halteglied 28 quer über das Gehäuse 14 des Betätigungselements 13 hinausgehend bis hin zu einem Wandbereich 30 des Ventilgehäuses 12, der dem die Ventilöffnung 18 enthaltenden Wandbereich 20 gegenüberliegt. Das Halteglied 28 enthält Durchbrüche 31 für den Durchlass der Kühlflüssigkeit.

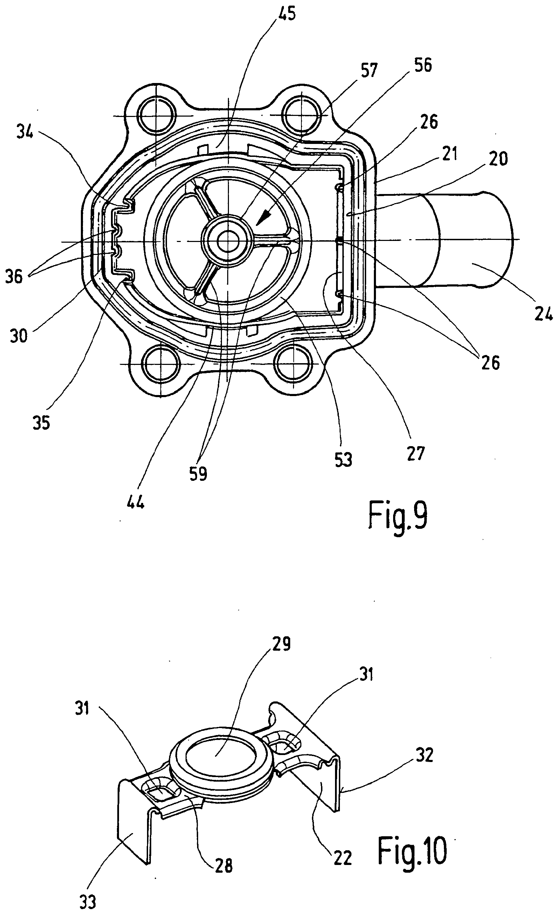

Der Flachschieber 22 am einen Ende des Haltegliedes 28 ist mit seiner dem geradflächigen Wandbereich 20 zugeordneten Dichtfläche 32 an die zugewandte Fläche der Längsvorsprünge 26 und/oder Rippen 27 im Bereich der zugeordneten Ventilöffnung 18 unter dortiger Abdichtung etwa federelastisch angepresst. Hierzu ist der Flachschieber 22 mit einer etwa quer darauf einwirkenden etwa federelastischen Anpresskraft beaufschlagt, die in Richtung zum zugeordneten geradflächigen Wandbereich 20 wirksam ist. Diese Anpresskraft kann über das Halteglied 28 selbst ausgeübt werden. Sie kann statt dessen oder zusätzlich dazu über das Halteglied 28 auch übertragen werden. Beim gezeigten Ausführungsbeispiel wird die etwa federelastische Anpresskraft von einem Stützschieber 33 über das Halteglied 28 auf den Flachschieber 22 ausgeübt. Der Stützschieber 33 ist dem Flachschieber 22 gegenüberstehend am Halteglied 28 angeordnet, z.B. so, wie der Flachschieber 22 auch, mit dem Halteglied 28 einstückig. Der Flachschieber 22, Stützschieber 33 und das Halteglied 28 sind mit Vorteil zu einem einstückigen Bauteil aus Metall oder Kunststoff vereinigt. Der Stützschieber 33 verläuft etwa parallel zum Flachschieber 22 und ist wie dieser ebenfalls flach eben gestaltet, wobei der Stützschieber 33 an dem zugeordneten, flachebenen Wandbereich 30 des Ventilgehäuses 12 abgestützt und verschiebbar ist. Hierzu ist der Stützschieber 33 z.B. zwischen zwei beabstandeten Längsrippen 34 und 35 am Wandbereich 30 des Ventilgehäuses 12 längsgeführt. Der dem Stützschieber 33 zugeordnete Wandbereich 30 des Ventilgehäuses 12 weist auf seiner Innenseite, die zum Inneren 25 hinweist, dorthin vorstehende Längsvorsprünge 36 auf, die in Verschieberichtung des Stützschiebers 33 verlaufen. Die Längsvorsprünge 36 sind z.B. als Stege, Rippen, Leisten od.dgl. ausgebildet. Der Stützschieber 33 liegt an der zum Inneren 25 des Ventilgehäuses 12 weisenden Fläche der Längsvorsprünge 36 an und ist entlang dieser bewegbar. Beim gezeigten Ausführungsbeispiel sind zwei zueinander etwa parallele Längsvorsprünge 36 vorgesehen, die zwischen den beidseitigen Längsrippen 34 und 35 verlaufen, die zum Inneren 25 hin weiter vorstehen derart, dass der Stützschieber 33 zwischen beiden Längsrippen 34 und 35 gehalten und geführt ist. Der Flachschieber 22 hat z.B. im Vergleich zu dem Stützschieber 33 eine größere Breite als letzterer. Aufgrund dessen kann mittels des Flachschiebers 22 und dementsprechend großen Fenster 23 ein großes Volumen an Kühlflüssigkeit gesteuert werden. Wie sich insbesondere aus Fig. 10 ergibt, bilden der Flachschieber 22, der Stützschieber 33 und das Halteglied 28 zusammen ein etwa U-förmiges Bauteil mit nach unten geöffnetem U.

Das Rückstellmittel 19, das beide Ventilverschlussglieder 16 und 17 beaufschlagt, ist aus einer Feder 37, insbesondere einer zylindrischen Schraubenfeder, gebildet, die das Gehäuse 14 des Betätigungselements 13 umfasst und mit dem einen, in Fig. 1 und 2 oberen Ende 38 am Halteglied 28 und über dieses am ersten Ventilverschlussglied 16 und über letzteres in Bezug auf das Gehäuse 14 abgestützt ist. Mit dem anderen, in Fig. 1 und 2 unteren Ende 39, das dem ersten Ventilverschlussglied 16 abgewandt ist, ist das Rückstellmittel 19, insbesondere die Feder 37, an einem etwa stegförmigen Abstützglied 40 abgestützt. Das Abstützglied 40 ist vom Gehäuse 14 des Betätigungselements 13 mit Bewegungsspiel durchsetzt und mit beiden Enden 41, 42 (Fig. 3) am Ventilgehäuse 12 abgestützt. Diese Abstützung erfolgt in vertikaler Richtung gemäß Fig. 2 derart beweglich, dass das Abstützglied 40 dann, wenn das Thermostatventil 10 mit dem Ventilgehäuse 12 mit seiner Unterseite auf einem nicht gezeigten zweiten Gehäuseteil aufgesetzt und damit befestigt wird, in Kontakt mit der Oberseite dieses nicht gezeigten zweiten Gehäuseteils gelangt und dabei gegen die Wirkung der Feder 37 in Fig. 2 nach oben in Richtung zum ersten Ventilverschlussglied 16 angehoben wird, so dass die Abstützung des Abstützgliedes 40 am Ventilgehäuse 12 aufgehoben ist und das Abstützglied 40 nunmehr gegenüber dem nicht gezeigten zweiten Gehäuseteil abgestützt und die Wirkung der Feder 37 auf diese Weise abgefangen wird. Das Abstützglied 40 besteht aus einem quer gerichteten Bügel, der z.B. in Bezug zum Halteglied 28 quer dazu, z.B. etwa rechtwinklig, verläuft. Dieser Bügel hat an beiden Enden in Fig. 2 nach unten zumindest geringfügig überstehende Rippen, wobei dieser Überstand der Rippen über die Unterseite des Ventilgehäuses 12 zumindest so groß ist, dass beim Aufsetzen und Anbringen des Ventilgehäuses 12 auf einen nicht gezeigten zweiten unteren Gehäuseteil diese überstehenden Rippen auf diesen unteren Gehäuseteil aufsitzen und dadurch das Abstützglied 40 zumindest geringfügig nach oben angehoben wird und nun vom zweiten Gehäuseteil abgestützt wird, wodurch das Ventilgehäuse 12 von der Belastung durch die Feder 37 entlastet ist.

Das Ventilgehäuse 12 weist am unteren offenen Ende 43 beidseitige nach innen gerichtete Vorsprünge 44 und 45 auf, an denen das Abstützglied 40 mit den Enden 41 bzw. 42 abgestützt ist. Das Abstützglied 40 wird bei der Montage ähnlich einem Renkverschluss eingebracht und soweit gedreht, bis deren Enden 41, 42 von den darunter verlaufenden Vorsprüngen 44, 45 aufgenommen werden.

Das Ventilgehäuse 12 weist einen im wesentlichen rohrförmigen zentralen Körper 50 auf, der z.B. ein durchgängiges einstückiges Bauteil darstellt. Der Körper 50 ist am unteren Ende 43 sowie am oberen Rohrende 51 jeweils offen und enthält im Inneren 25 einen die Ventilöffnung 18 bildenden zentralen Durchströmraum und bildet mit den beiden offenen Rohrenden 43, 51 jeweilige Zuström- oder Abströmöffnungen für das Kühlmittel. An einer Seite des Körpers 50 trägt das Ventilgehäuse 12 den damit einstückigen, z.B. etwa spitzwinklig nach oben, abstrebenden Anschlussstutzen 24. Der Körper 50 weist einen mittleren Bereich 52 auf, der im Inneren die als Ringfläche gebildete Ventilsitzfläche 53 enthält, die vom ersten Ventilverschlussglied 16 steuerbar ist. Anschließend an diese Ventilsitzfläche 53 weist der Körper 50 einen schmaleren Rohrabschnitt 54 mit einem im Durchmesser kleineren, bis zum Rohrende 51 führenden Rohrkanal 55 auf. Das so gestaltete Ventilgehäuse 12 ist somit in hohem Grade strömungsgünstig ausgebildet.

Der Körper 50 des Ventilgehäuses 12 enthält im schmaleren Rohrabschnitt 54 eine Abstützeinrichtung 56, an der der Kolben 15 des Betätigungselements 13, erforderlichenfalls mit einer etwa hutförmigen Kappe 9 bestückt, endseitig abgestützt ist. Die Abstützeinrichtung 56 weist eine im Rohrkanal 55 im wesentlichen zentrale Buchse 57 mit einer unten offenen Aufnahme 58 für das Ende des Kolbens 15 und mindestens einen radialen Tragsteg 59 auf, an dem die Buchse 57 gehalten ist und der seinerseits am Ventilgehäuse 12 fest angeordnet ist. Beim gezeigten Ausführungsbeispiel sind drei in etwa gleichen Umfangswinkelabständen voneinander verlaufende Tragstege 59 vorhanden. Die Buchse 57 und der mindestens eine Tragsteg 59 sind miteinander einstückig und dabei strömungsgünstig geformt. Die Buchse 57 hat die äußere Kontur etwa ähnlich einer Flasche. Sie hat im unteren Bereich einen größeren Durchmesser als am oberen Endbereich, bis zu dem der Außendurchmesser der Buchse 57 sich allmählich verringert. Der mindestens eine Tragsteg 59 weist eine in Axialrichtung des Rohrkanals 55 gemessen wesentliche Breite auf und erstreckt sich über die gesamte Länge der Buchse 57. Die Querschnittsdicke des mindestens einen Tragsteges 59 ist im etwa mittleren Bereich z.B. etwas größer als in Axialrichtung des Rohrkanals 55 betrachtet zu beiden Enden hin, zu denen diese Querschnittsdicke z.B. etwa stetig abnehmen kann. Durch diese Querschnittsgestaltung des mindestens einen Tragsteges 59 und durch die beschriebene Gestaltung der Buchse 57 ist ein besonders strömungsgünstiger Verlauf erreicht, wobei zugleich auch kräftemäßig Vorteile durch erhöhtes Widerstandsmoment erzielt sind. Die drei in Umfangsrichtung in etwa gleich großen Winkelabständen voneinander angeordneten Tragstege 59 können jeweils gleich gestaltet sein.

Das Ventilgehäuse 12 ist einschließlich der Abstützeinrichtung 56 als einstückiges Bauteil gestaltet, z.B. als Spritzgießformteil aus Kunststoff. Dies hat den Vorteil einer möglichst einfachen und kostengünstigen Herstellung, was bei derartigen Serienbauteilen besonders vorteilhaft zu Buche schlägt.

Wird von einer Ausgangsstellung des Thermostatventils 10 gemäß Fig. 1 ausgegangen, bei der das erste Ventilverschlussglied 16 an der Ventilsitzfläche 53 anliegt und dadurch der Ventildurchfluss 11 versperrt ist, wird das am unteren Ende 43 gemäß Pfeil 1 zugeführte Kühlmittel in das Innere 25 eingeleitet und aufgrund des in Öffnungsstellung befindlichen zweiten Ventilverschlussgliedes 17 durch die zweite Ventilöffnung 18 hindurch in den Anschlussstutzen 24 geleitet und aus diesem gemäß Pfeil 2 zur Brennkraftmaschine zurückgeführt. Erwärmt sich das Kühlmittel, dehnt sich der Dehnstoff im Gehäuse 14 aus, wodurch das Gehäuse 14 relativ zum unbeweglich abgestützten Kolben 15 in Fig. 1 und 2 nach unten verschoben wird gegen die Wirkung der Feder 37. Zusammen damit wird das erste Ventilverschlussglied 16 und über dieses das Halteglied 28 mit Flachschieber 22 und Stützschieber 33 in Fig. 1 und 2 nach unten verschoben. Dabei wird das erste Ventilverschlussglied 16 in Öffnungsstellung gebracht, während das zweite Ventilverschlussglied 17 in Form des Flachschiebers 22 entsprechend der Verschiebung blendenartig die zweite Ventilöffnung 18 in Gestalt des Fensters 23 verschließt. Bei dieser Bewegung des Haltegliedes 28 gleitet der Flachschieber 22 entlang den Längsvorsprüngen 26 und Rippen 27, auf deren zum Inneren 25 gewandter Außenfläche der Flachschieber 22 mit seiner Dichtfläche 32 anliegt. Der Stützschieber 33 gleitet dabei, geführt zwischen den beiden Längsrippen 34 und 35, entlang des Längsvorsprüngen 36. Zwischen dem Stützschieber 33 und dem Flachschieber 22 wirkt in Querrichtung eine so ausreichend große federelastische Anpresskraft, dass der Flachschieber 22 in Kontakt mit den Längsvorsprüngen 26 und/oder Rippen 27 gehalten ist und bleibt. Mit zunehmender Temperaturerhöhung des Kühlmittels wird das Hauptventil durch Öffnen des ersten Ventilverschlussgliedes 16 geöffnet während das Bypassventil mittels des zweiten Ventilverschlussgliedes 17 in Gestalt des Flachschiebers 22 in Schließstellung geht, soweit, bis schließlich die zugeordnete zweite Ventilöffnung 18 durch den Flachschieber 22 vollständig verschlossen ist. Ein etwaiger Überhub des Gehäuses 14 in Fig. 1 und 2 nach unten kann von der Feder 37 und durch entsprechend große zur Verfügung stehende axiale Verschiebefläche für den Flachschieber 22 und auch den Stützschieber 33 ausgeglichen werden.

Sinkt die Temperatur des hindurchgeführten Kühlmittels, so kühlt der Dehnstoff im Gehäuse 14 unter Volumenabnahme ab. Das in Ventilöffnungsrichtung zusammengedrückte Rückstellmittel 19 in Gestalt der Feder 37, welches über das Halteglied 28 das zweite Ventilverschlussglied 17 und das erste Ventilverschlussglied 16 beaufschlagt, verschiebt über diese sodann das Gehäuse 14 in Fig. 1 und 2 nach oben, bis das erste Ventilverschlussglied 16 an der Ventilsitzfläche 53 anliegt und in Schließstellung gelangt und das zweite Ventilverschlussglied 17 die Ventilöffnung 18 freigibt.

Bei der Bewegung des Gehäuses 14 des Betätigungselements 13 ist dieses Gehäuse in Querrichtung zentriert und in Axialrichtung geführt durch das Abstützglied 40 am unteren Ende des Gehäuses 14, durch das aus Halteglied 28, Flachschieber 22 und Stützschieber 33 bestehende Bauteil, das eine Zentrierung und Führung im oberen Bereich des Gehäuses 14 bewirkt, und durch den in der Aufnahme 58 aufgenommenen Kolben 15. Damit ist mit einfachen Mitteln eine zuverlässige Zentrierung und Führung des Gehäuses 14 erreicht. Das Thermostatventil 10 ist einfach, kompakt und kostengünstig. Es benötigt nur wenige Bauteile, wobei diese zugleich einfach sind und kostengünstig herstellbar sind. Die Montage des Thermostatventils 10 ist sehr einfach zu bewerkstelligen. Das Ventilgehäuse 12 ist als einstückiges Bauteil kompakt und materialsparend und bedingt nur einen geringen Herstellungsaufwand. All diese Vorteile wirken sich insbesondere deswegen nachhaltig günstig aus, weil derartige Thermostatventile 10 in großen Stückzahlen als Serienteile hergestellt und benötigt werden.

## Patentansprüche

1. Thermostatventil (10) zur Regelung der Temperatur der Kühlflüssigkeit einer Brennkraftmaschine, insbesondere eines Kraftfahrzeugmotors, das den Kühlmittelfluss von der Brennkraftmaschine durch einen Bypass und/oder durch einen Wärmeaustauscher zurück zur Brennkraftmaschine regelt, mit einem einen Ventildurchfluss (11) aufweisenden Ventilgehäuse (12), einem thermostatischen Betätigungselement (13), bei dem ein in einem Gehäuse (14) eingeschlossener, sich bei Erwärmung ausdehnender Dehnstoff einen Kolben (15) verschiebt, mit einem den Ventildurchfluss (11) beherrschenden, bei der Relativbewegung zwischen Gehäuse (14) und Kolben (15) verschiebbaren ersten Ventilverschlussglied (16), einem zweiten Ventilverschlussglied (17), das mit der Relativverschiebung des Gehäuses (14) verschiebbar ist und einer den Bypass steuernden zweiten Ventilöffnung (18) zugeordnet ist, und mit einem einzigen, beide Ventilverschlussglieder (16, 17) beaufschlagenden Rückstellmittel (19),
**dadurch gekennzeichnet, dass** das erste Ventilverschlussglied (16) etwa tellerförmig ist und die von diesem ersten Ventilverschlussglied (16) gesteuerte Ventilsitzfläche (53) als Ringfläche ausgebildet ist,
dass die dem zweiten Ventilverschlussglied (17) zugeordnete zweite Ventilöffnung (18) in einem im wesentlichen geradflächigen Wandbereich (20) einer Seitenwand (21) des Ventilgehäuses (12) enthalten ist,
dass das zweite Ventilverschlussglied (17) als zu diesem derart geformten Wandbereich (20) etwa paralleler Flachschieber (22) ausgebildet ist, der an dem Wandbereich (20) anliegt und längs dieses zum Öffnen und Verschließen der zweiten Ventilöffnung (18) verschiebbar ist-,
dass der die Ventilöffnung (18) enthaltende Wandbereich (20) die Ventilöffnung (18) umrahmende vorstehende Rippen (27) aufweist, an deren zum Inneren (25) des Ventilgehäuses (12) weisender Fläche der Flachschieber (22) anliegt und entlang beweglich ist,
und dass der Flachschieber (22) mit seiner dem geradflächigen Wandbereich (20) zugeordneten Dichtfläche (32) an die zugewandte Fläche der Rippen (27) im Bereich der zugeordneten Ventilöffnung (18) unter Abdichtung etwa federelastisch angepresst ist.

2. Thermostatventil nach Anspruch 1, **dadurch gekennzeichnet, dass** die dem Flachschieber (22) zugeordnete Ventilöffnung (18) als rundes oder vorzugsweise im wesentlichen viereckiges Fenster (23) ausgebildet ist.

3. Thermostatventil nach Anspruch 1 oder 2, **dadurch gekennzeichnet, dass** die dem Flachschieber (22) zugeordnete Ventilöffnung (18) mit einem Anschlussstutzen (24) in Verbindung steht, der vorzugsweise einstückig mit dem Ventilgehäuse (12) ist.

4. Thermostatventil nach einem der Ansprüche 1 bis 3, **dadurch gekennzeichnet, dass** der die Ventilöffnung (18) enthaltende Wandbereich (20) auf seiner zum Inneren (25) des Ventilgehäuses (12) weisenden Innenseite mehrere in Verschieberichtung des Flachschiebers (22) verlaufende Längsvorsprünge (26), z.B. Stege, Rippen, Leisten od. dgl., aufweist, an deren zum Inneren (25) des Ventilgehäuses (12) weisender Fläche der Flachschieber (22) anliegt und entlang beweglich ist.

5. Thermostatventil nach einem der Ansprüche 1 bis 4, **dadurch gekennzeichnet, dass** der Flachschieber (22) an einem quer dazu verlaufenden und an dessen oberem Endbereich angreifenden Halteglied (28) gehalten ist.

6. Thermostatventil nach Anspruch 5, **dadurch gekennzeichnet, dass** das Halteglied (28) am Gehäuse (14) des Betätigungselements (13) und/oder am ersten Ventilverschlussglied (16) verschieblich oder unverschieblich gehalten ist.

7. Thermostatventil nach Anspruch 5 oder 6, **dadurch gekennzeichnet, dass** das Halteglied (28) einen Durchlass (29) aufweist, durch den sich das Gehäuse (14) des Betätigungselements (13) hindurch erstreckt.

8. Thermostatventil nach einem der Ansprüche 5 bis 7, **dadurch gekennzeichnet, dass** das Halteglied (28) unterhalb des ersten Ventilverschlussgliedes (16) angeordnet ist.

9. Thermostatventil nach einem der Ansprüche 5 bis 8, **dadurch gekennzeichnet, dass** das Halteglied (28) sich quer über das Gehäuse (14) des Betätigungselements (13) hinausgehend bis zu einem Wandbereich (30) des Ventilgehäuses (12) erstreckt, welcher dem die Ventilöffnung (18) enthaltenden Wandbereich (20) gegenüberliegt.

10. Thermostatventil nach einem der Ansprüche 5 bis 9, **dadurch gekennzeichnet, dass** das Halteglied (28) Durchbrüche (31) für den Durchlass der Kühlflüssigkeit enthält.

11. Thermostatventil nach einem der Ansprüche 1 bis 10, **dadurch gekennzeichnet, dass** der Flachschieber (22) mit seiner dem geradflächigen Wandbereich (20) zugeordneten Dichtfläche (32) an die zugewandte Fläche der Längsvorsprünge (26) im Bereich der zugeordneten Ventilöffnung (18) unter Abdichtung etwa federelastisch angepresst ist.

12. Thermostatventil nach Anspruch 11, **dadurch gekennzeichnet, dass** der Flachschieber (22) mit einer etwa quer darauf einwirkenden, etwa federelastischen Anpresskraft in Richtung zum zugeordneten geradflächigen Wandbereich (20) beaufschlagt ist.

13. Thermostatventil nach Anspruch 12, **dadurch gekennzeichnet, dass** die Anpresskraft über das Halteglied (28) ausgeübt und/oder übertragen wird.

14. Thermostatventil nach einem der Ansprüche 5 bis 13, **dadurch gekennzeichnet, dass** am Halteglied (28) ein dem Flachschieber (22) gegenüberstehender, dazu etwa parallel verlaufender flacher Stützschieber (33) angeordnet ist, der an dem zugeordneten, flachebenen Wandbereich (30) des Ventilgehäuses (12) abgestützt und verschiebbar ist.

15. Thermostatventil nach Anspruch 14, **dadurch gekennzeichnet, dass** der Stützschieber (33) zwischen zwei beabstandeten Längsrippen (34, 35) am zugeordneten Wandbereich (30) des Ventilgehäuses (12) längsgeführt ist.

16. Thermostatventil nach Anspruch 14 oder 15, **dadurch gekennzeichnet, dass** der dem Stützschieber (33) zugeordnete Wandbereich (30) des Ventilgehäuses (12) auf seiner Innenseite zum Inneren (25) vorstehende, in Verschieberichtung des Stützschiebers (33) verlaufende Längsvorsprünge (36), z.B. Stege, Rippen, Leisten od. dgl., aufweist, an deren zum Inneren (25) des Ventilgehäuses (12) weisender Fläche der Stützschieber (33) anliegt und entlang bewegbar ist.

17. Thermostatventil nach einem der Ansprüche 12 bis 16, **dadurch gekennzeichnet, dass** vom Stützschieber (33) über das Halteglied (28) die etwa federelastische Anpresskraft auf den Flachschieber (22) ausgeübt wird.

18. Thermostatventil nach einem der Ansprüche 1 bis 17, **dadurch gekennzeichnet, dass** der Flachschieber (22), der Stützschieber (33) und das Halteglied (28) zu einem einstückigen Bauteil aus Metall oder Kunststoff vereinigt sind.

19. Thermostatventil nach einem der Ansprüche 1 bis 18, **dadurch gekennzeichnet, dass** der Flachschieber (22), der Stützschieber (33) und das Halteglied (28) zusammen ein etwa U-förmiges Bauteil bilden.

20. Thermostatventil nach einem der Ansprüche 1 bis 19, **dadurch gekennzeichnet, dass** der Flachschieber (22) eine größere Breite als der Stützschieber (33) aufweist.

21. Thermostatventil nach einem der Ansprüche 1 bis 20, **dadurch gekennzeichnet, dass** das Rückstellmittel (19) aus einer Feder (37), insbesondere einer zylindrischen Schraubenfeder, gebildet ist, die das Gehäuse (14) des Betätigungselements (13) umfasst und mit einem Ende (38) am Halteglied (28) abgestützt ist.

22. Thermostatventil, nach einem der Ansprüche 1 bis 21, **dadurch gekennzeichnet, dass** das Rückstellmittel (19), insbesondere die Feder (37), mit ihrem dem ersten Ventilverschlussglied (16) abgewandten Ende (39) an einem etwa stegförmigen Abstützglied (40) abgestützt ist, das vom Gehäuse (14) des Betätigungselements (13) mit Bewegungsspiel durchsetzt ist und mit beiden Enden (41, 42) am Ventilgehäuse (12) derart beweglich abgestützt ist, dass das Abstützglied (40) beim Aufsetzen und Anbringen des Ventilgehäuses (12) auf einen zweiten Gehäuseteil (nicht gezeigt) von letzterem gegen die Wirkung des Rückstellmittels (19) in Richtung zum ersten Ventilverschlussglied (16) vom Ventilgehäuse (12) weg anhebbar und abstützbar ist.

23. Thermostatventil nach Anspruch 21 oder 22, **dadurch gekennzeichnet, dass** das Ventilgehäuse (12) am unteren offenen Ende (43) beidseitige nach innen gerichtete Vorsprünge (44, 45) aufweist, an denen das Abstützglied (40) mit den Enden (41, 42) abgestützt ist.

24. Thermostatventil nach einem der Ansprüche 1 bis 23, **dadurch gekennzeichnet, dass** das Ventilgehäuse (12) einen im wesentlichen rohrförmigen zentralen Körper (50) aufweist, der am unteren sowie am oberen Rohrende (43 bzw. 51) jeweils offen ist und im Inneren (25) einen die Ventilöffnung (18) bildenden zentralen Durchströmraum enthält und mit den beiden offenen Rohrenden (43, 51) jeweilige Zuström- oder Abströmöffnungen für das Kühlmittel bildet.

25. Thermostatventil nach einem der Ansprüche 2 bis 24, **dadurch gekennzeichnet, dass** das Ventilgehäuse (12) an einer Seite des Körpers (50) den damit einstückigen, z.B. etwa spitzwinklig nach oben, abstrebenden Anschlussstutzen (24) trägt.

26. Thermostatventil nach Anspruch 24 oder 25, **dadurch gekennzeichnet, dass** der Körper (50) einen mittleren Bereich (52) aufweist, der im Inneren die vom ersten Ventilverschlussglied (16) steuerbare Ventilsitzfläche (53) aufweist, und dass der Körper (50) anschließend an die Ventilsitzfläche (53) einen schmaleren Rohrabschnitt (54) mit einem im Durchmesser kleineren, bis zum Rohrende (51) führenden Rohrkanal (55) aufweist.

27. Thermostatventil nach einem der Ansprüche 1 bis 26, **dadurch gekennzeichnet, dass** der Körper (50) des Ventilgehäuses (12) im schmaleren Rohrabschnitt (54) eine Abstützeinrichtung (56) enthält, an der der Kolben (15) des Betätigungselements (13) endseitig abgestützt ist.

28. Thermostatventil nach Anspruch 27, **dadurch gekennzeichnet, dass** die Abstützeinrichtung (56) eine im Rohrkanal (55) im wesentlichen zentrale Buchse (57) mit einer unten offenen Aufnahme (58) für das Ende des Kolbens (15) und mindestens einen radialen Tragsteg (59) aufweist, an dem die Buchse (57) gehalten ist und der seinerseits am Ventilgehäuse (12) fest angeordnet ist.

29. Thermostatventil nach Anspruch 28, **dadurch gekennzeichnet, dass** die Buchse (57) und der mindestens eine Tragsteg (59) miteinander einstückig sind und strömungsgünstig geformt sind.

30. Thermostatventil nach Anspruch 28 oder 29, **dadurch gekennzeichnet, dass** die Buchse (57) eine äußere Kontur ähnlich etwa einer Flasche aufweist.

31. Thermostatventil nach einem der Ansprüche 28 bis 30, **dadurch gekennzeichnet, dass** der mindestens eine Tragsteg (59) eine in Axialrichtung des Rohrkanals (55) gemessen wesentliche Breite aufweist und sich über die gesamte Länge der Buchse (57) erstreckt.

32. Thermostatventil nach einem der Ansprüche 28 bis 31, **dadurch gekennzeichnet, dass** der mindestens eine Tragsteg (59) in Axialrichtung des Rohrkanals (55) betrachtet im mittleren Bereich eine größere Querschnittsdicke als zu beiden Enden hin aufweist, zu denen die Querschnittsdicke z.B. stetig abnimmt.

33. Thermostatventil nach einem der Ansprüche 27 bis 32, **dadurch gekennzeichnet, dass** die Abstützeinrichtung (56) drei in Umfangsrichtung in etwa gleich großen Winkelabständen voneinander angeordnete, vorzugsweise gleichgestaltete, Tragstege (59) aufweist.

34. Thermostatventil nach einem der Ansprüche 1 bis 33, **dadurch gekennzeichnet, dass** das Ventilgehäuse (12) einschließlich der Abstützeinrichtung (56) ein einstückiges Bauteil ist und vorzugsweise aus Kunststoff gebildet ist, z.B. als Spritzgießformteil ausgebildet ist.

## Claims

1. Thermostat valve (10) for regulating the temperature of the cooling liquid of an internal combustion engine, in particular of a motor vehicle engine, which thermostat valve regulates the coolant flow from the internal combustion engine through a bypass and/or through a heat exchanger back to the internal combustion engine, having a valve housing (12) which has a valve flow passage (11), having a thermostatic actuating element (13) in which an expansion material which is enclosed in a housing (14) and which expands when heated displaces a piston (15), having a first valve closing element (16) which controls the valve flow passage (11) and which can be displaced during the relative movement between housing (14) and piston (15), having a second valve closing element (17) which can be displaced with the relative displacement of the housing (14) and which is associated with a second valve opening (18) that controls the bypass, and having a single restoring means (19) which acts on both valve closing elements (16, 17),
**characterized in that** the first valve closing element (16) is of approximately plate-shaped form and the valve seat surface (53) that is controlled by said first valve closing element (16) is in the form of an annular surface,
**in that** the second valve opening (18) associated with the second valve closing element (17) is comprised in a substantially planar wall region (20) of a side wall (21) of the valve housing (12),
**in that** the second valve closing element (17) is formed as a flat slide (22) which is approximately parallel to said wall region (20) of said form and which bears against the wall region (20) and is displaceable along said wall region for the purpose of opening and closing the second valve opening (18),
**in that** the wall region (20) that comprises the valve opening (18) has protruding ribs (27) which border the valve opening (18), wherein the flat slide (22) bears against and is movable along that surface of said ribs which points towards the interior (25) of the valve housing (12),
and **in that** the flat slide (22), by way of its sealing surface (32) associated with the planar wall region (20), is pressed with sealing action and with approximately resiliently elastic action against the facing surface of the ribs (27) in the region of the associated valve opening (18).

2. Thermostat valve according to Claim 1, **characterized in that** the valve opening (18) which is associated with the flat slide (22) is in the form of a circular or preferably substantially square window (23).

3. Thermostat valve according to Claim 1 or 2, **characterized in that** the valve opening (18) associated with the flat slide (22) is connected to a connecting pipe (24) which is preferably integral with the valve housing (12).

4. Thermostat valve according to one of Claims 1 to 3, **characterized in that** the wall region (20) that comprises the valve opening (18) has, on its inner side pointing towards the interior (25) of the valve housing (12), multiple longitudinal projections (26), for example webs, ribs, strips or the like, which run in the direction of displacement of the flat slide (22), wherein the flat slide (22) bears against and is movable along that surface of said longitudinal projections which points towards the interior (25) of the valve housing (12).

5. Thermostat valve according to one of Claims 1 to 4, **characterized in that** the flat slide (22) is held on a holding element (28) which runs transversely with respect to said flat slide and which engages on the upper end region of said flat slide.

6. Thermostat valve according to Claim 5, **characterized in that** the holding element (28) is displaceably or non-displaceably held on the housing (14) of the actuating element (13) and/or on the first valve closing element (16).

7. Thermostat valve according to Claim 5 or 6, **characterized in that** the holding element (28) has a passage (29) through which the housing (14) of the actuating element (13) extends.

8. Thermostat valve according to one of Claims 5 to 7, **characterized in that** the holding element (28) is arranged below the first valve closing element (16).

9. Thermostat valve according to one of Claims 5 to 8, **characterized in that** the holding element (28) extends transversely beyond the housing (14) of the actuating element (13) to a wall region (30), which is situated opposite the wall region (20) that comprises the valve opening (18), of the valve housing (12).

10. Thermostat valve according to one of Claims 5 to 9, **characterized in that** the holding element (28) has apertures (31) for the passage of the cooling liquid.

11. Thermostat valve according to one of Claims 1 to 10, **characterized in that** the flat slide (22), by way of its sealing surface (32) associated with the planar wall region (20), is pressed with with sealing action and with approximately resiliently elastic action against the facing surface of the longitudinal projections (26) in the region of the associated valve opening (18).

12. Thermostat valve according to Claim 11, **characterized in that** the flat slide (22) is subjected to a for example resiliently elastic pressing force, acting approximately transversely thereon, in the direction of the associated planar wall region (20).

13. Thermostat valve according to Claim 12, **characterized in that** the pressing force is exerted and/or transmitted via the holding element (28).

14. Thermostat valve according to one of Claims 5 to 13, **characterized in that**, on the holding element (28), there is arranged a flat support slide (33) which is situated opposite and runs approximately parallel to the flat slide (22) and which is supported and displaceable on the associated flat planar wall region (30) of the valve housing (12).

15. Thermostat valve according to Claim 14, **characterized in that** the support slide (33) is guided longitudinally between two spaced-apart longitudinal ribs (34, 35) on the associated wall region (30) of the valve housing (12).

16. Thermostat valve according to Claim 14 or 15, **characterized in that** that wall region (30) of the valve housing (12) which is associated with the support slide (33) has, on its inner side, longitudinal projections (36), for example webs, ribs, strips or the like, which project towards the interior (25) and which run in the displacement direction of the support slide (33), wherein the support slide (33) bears against and is movable along that surface of said longitudinal projections which points towards the interior (25) of the valve housing (12).

17. Thermostat valve according to one of Claims 12 to 16, **characterized in that** the for example resiliently elastic pressing force is exerted on the flat slide (22) by the support slide (33) via the holding element (28).

18. Thermostat valve according to one of Claims 1 to 17, **characterized in that** the flat slide (22), the support slide (33) and the holding element (28) are combined to form a unipartite component composed of metal or plastic.

19. Thermostat valve according to one of Claims 1 to 18, **characterized in that** the flat slide (22), the support slide (33) and the holding element (28) together form an approximately U-shaped component.

20. Thermostat valve according to one of Claims 1 to 19, **characterized in that** the flat slide (22) has a greater width than the support slide (33).

21. Thermostat valve according to one of Claims 1 to 20, **characterized in that** the restoring means (19) is formed from a spring (37), in particular a cylindrical helical spring, which surrounds the housing (14) of the actuating element (13) and which is supported by way of one end (38) on the holding element (28).

22. Thermostat valve according to one of Claims 1 to 21, **characterized in that** the restoring means (19), in particular the spring (37), is supported by way of its end (39) facing away from the first valve closing element (16) on an approximately web-shaped support element (40) through which the housing (14) of the actuating element (13) extends with a movement clearance, which support element is supported by way of both ends (41, 42) on the valve housing (12) in movable fashion such that, during the mounting and attachment of the valve housing (12) onto a second housing part (not shown), the support element (40) can be lifted away from the valve housing (12) in the direction of the first valve closing element (16), and supported, by said second housing part counter to the action of the restoring means (19).

23. Thermostat valve according to Claim 21 or 22, **characterized in that** the valve housing (12) has inwardly directed projections (44, 45) on both sides at the bottom, open end (43), on which projections the support element (40) is supported by way of its ends (41, 42).

24. Thermostat valve according to one of Claims 1 to 23, **characterized in that** the valve housing (12) has a substantially tubular central body (50) which is open in each case at the bottom and at the top tube end (43 and 51 respectively) and which, in the interior (25), comprises a central throughflow chamber which forms the valve opening (18) and which forms respective inflow or outflow openings for the coolant by way of the two open tube ends (43, 51).

25. Thermostat valve according to one of Claims 2 to 24, **characterized in that** the valve housing (12) bears, on one side of the body (50), the connection pipe (24) which is integral with said body and which for example projects upward at an acute angle.

26. Thermostat valve according to Claim 24 or 25, **characterized in that** the body (50) has a central region (52) which has, in the interior, the valve seat surface (53) that can be controlled by the first valve closing element (16), and **in that** the body (50) has, adjoining the valve seat surface (53), a relatively narrow tube section (54) with a tube duct (55) which is of relatively small diameter and which leads to the tube end (51).

27. Thermostat valve according to one of Claims 1 to 26, **characterized in that** the body (50) of the valve housing (12) comprises, in the relatively narrow tube section (54), a support device (56) on which the end of the piston (15) of the actuating element (13) is supported.

28. Thermostat valve according to Claim 27, **characterized in that** the support device (56) has a bushing (57), said bushing being substantially central in the tube duct (55) and having a downwardly open receptacle (58) for the end of the piston (15) and having at least one radial supporting web (59) on which the bushing (57) is held and which in turn is arranged fixedly on the valve housing (12).

29. Thermostat valve according to Claim 28, **characterized in that** the bushing (57) and the at least one supporting web (59) are integral with one another and are of streamlined form.

30. Thermostat valve according to Claim 28 or 29, **characterized in that** the bushing (57) has an outer contour of bottle-like form.

31. Thermostat valve according to one of Claims 28 to 30, **characterized in that** the at least one supporting web (59) has a main width measured in the axial direction of the tube duct (55) and extends over the entire length of the bushing (57).

32. Thermostat valve according to one of Claims 28 to 31, **characterized in that** the at least one supporting web (59), as viewed in the axial direction of the tube duct (55), has a greater cross-sectional thickness in the central region than towards both ends, towards which the cross-sectional thickness decreases for example in continuous fashion.

33. Thermostat valve according to one of Claims 27 to 32, **characterized in that** the support device (56) has three supporting webs (59) which are preferably of identical design and which are arranged at approximately uniform angular intervals with respect to one another in the circumferential direction.

34. Thermostat valve according to one of Claims 1 to 33, **characterized in that** the valve housing (12) including the support device (56) is a unipartite component and is preferably formed from plastic, for example as an injection moulded part.

## Revendications

1. Soupape thermostatique (10) pour la régulation de la température du liquide de refroidissement d'un moteur à combustion interne, en particulier d'un moteur de véhicule automobile, qui régule le flux de réfrigérant allant du moteur à combustion interne à travers une dérivation et/ou à travers un échangeur de chaleur et revenant jusqu'au moteur à combustion interne, avec un boîtier de soupape (12) présentant un passage de soupape (11), un élément d'actionnement thermostatique (13), dans lequel un matériau extensible incorporé dans un boîtier (14), se dilatant sous l'effet de la chaleur, déplace un piston (15), avec un premier organe de fermeture de soupape (16) commandant le passage de soupape (11), pouvant être déplacé entre le boîtier (14) et le piston (15) lors d'un mouvement relatif, un deuxième organe de fermeture de soupape (17), qui peut être déplacé avec le déplacement relatif du boîtier (14) et qui est associé à une deuxième ouverture de soupape (18) commandant la dérivation, et avec un moyen de rappel (19) unique, sollicitant les deux organes de fermeture de soupape (16, 17),
**caractérisée en ce que** le premier organe de fermeture de soupape (16) est approximativement en forme de plateau et la surface de siège de soupape (53) commandée par ce premier organe de fermeture de soupape (16) est réalisée sous forme de surface annulaire,
**en ce que** la deuxième ouverture de soupape (18) associée au deuxième organe de fermeture de soupape (17) est contenue dans une région de paroi (20) essentiellement plane d'une paroi latérale (21) du boîtier de soupape (12) **en ce que** le deuxième organe de fermeture de soupape (17) est réalisé sous forme de coulisseau plat (22) approximativement parallèle à cette région de paroi ainsi formée (20), lequel coulisseau plat s'applique contre la région de paroi (20) et peut être déplacé le long de celle-ci pour ouvrir et fermer la deuxième ouverture de soupape (18),
**en ce que** la région de paroi (20) contenant l'ouverture de soupape (18) présente des ailettes (27) saillantes entourant l'ouverture de soupape (18), le coulisseau plat (22) s'appliquant contre et pouvant être déplacé le long de leur surface tournée vers l'intérieur (25) du boîtier de soupape (12),
et **en ce que** le coulisseau plat (22) est pressé de manière hermétique et de manière quelque peu élastique à ressort avec sa surface d'étanchéité (32) associée à la région de paroi plane (20) contre la surface tournée vers elle des ailettes (27) dans la région de l'ouverture de soupape associée (18).

2. Soupape thermostatique selon la revendication 1, **caractérisée en ce que** l'ouverture de soupape (18) associée au coulisseau plat (22) est réalisée sous forme de fenêtre (23) ronde ou de préférence essentiellement rectangulaire.

3. Soupape thermostatique selon la revendication 1 ou 2, **caractérisée en ce que** l'ouverture de soupape (18) associée au coulisseau plat (22) est en liaison avec un raccord (24) qui est de préférence réalisé d'une seule pièce avec le boîtier de soupape (12).

4. Soupape thermostatique selon l'une quelconque des revendications 1 à 3, **caractérisée en ce que** la région de paroi (20) contenant l'ouverture de soupape (18) présente, sur son côté intérieur tourné vers l'intérieur (25) du boîtier de soupape (12), plusieurs saillies longitudinales (26) s'étendant dans la direction de déplacement du coulisseau plat (22), par exemple des nervures, des ailettes, des baguettes ou similaires, le coulisseau plat (22) s'appliquant contre et pouvant être déplacé le long de leur surface tournée vers l'intérieur (25) du boîtier de soupape (12).

5. Soupape thermostatique selon l'une quelconque des revendications 1 à 4, **caractérisée en ce que** le coulisseau plat (22) est retenu au niveau d'un organe de retenue (28) s'étendant transversalement à celui-ci et venant en prise au niveau de sa région d'extrémité supérieure.

6. Soupape thermostatique selon la revendication 5, **caractérisée en ce que** l'organe de retenue (28) est retenu de manière déplaçable ou non déplaçable au niveau du boîtier (14) de l'élément d'actionnement (13) et/ou au niveau du premier organe de fermeture de soupape (16).

7. Soupape thermostatique selon la revendication 5 ou 6, **caractérisée en ce que** l'organe de retenue (28) présente un passage (29), à travers lequel s'étend le boîtier (14) de l'élément d'actionnement (13).

8. Soupape thermostatique selon l'une quelconque des revendications 5 à 7, **caractérisée en ce que** l'organe de retenue (28) est disposé en dessous du premier organe de fermeture de soupape (16).

9. Soupape thermostatique selon l'une quelconque des revendications 5 à 8, **caractérisée en ce que** l'organe de retenue (28) s'étend transversalement au-delà du boîtier (14) de l'élément d'actionnement (13) jusqu'à une région de paroi (30) du boîtier de soupape (12) qui est opposée à la région de paroi (20) contenant l'ouverture de soupape (18).

10. Soupape thermostatique selon l'une quelconque des revendications 5 à 9, **caractérisée en ce que** l'organe de retenue (28) contient des orifices (31) pour le passage du liquide de refroidissement.

11. Soupape thermostatique selon l'une quelconque des revendications 1 à 10, **caractérisée en ce que** le coulisseau plat (22) est pressé de manière hermétique et de manière quelque peu élastique à ressort avec sa surface d'étanchéité (32) associée à la région de paroi plane (20) contre la surface tournée vers elle des saillies longitudinales (26) dans la région de l'ouverture de soupape associée (18).

12. Soupape thermostatique selon la revendication 11, **caractérisée en ce que** le coulisseau plat (22) est sollicité avec une force de pression quelque peu élastique à ressort agissant approximativement transversalement sur celui-ci dans la direction de la région de paroi plane (20) associée.

13. Soupape thermostatique selon la revendication 12, **caractérisée en ce que** la force de pression est exercée et/ou transmise par le biais de l'organe de retenue (28).

14. Soupape thermostatique selon l'une quelconque des revendications 5 à 13, **caractérisée en ce qu'** un coulisseau de support plat (33) opposé au coulisseau plat (22), s'étendant approximativement parallèlement à celui-ci, est disposé au niveau de l'organe de retenue (28), lequel est supporté et peut être déplacé au niveau de la région de paroi plane associée (30) du boîtier de soupape (12).

15. Soupape thermostatique selon la revendication 14, **caractérisée en ce que** le coulisseau de support (33) est guidé longitudinalement entre deux ailettes longitudinales espacées (34, 35) au niveau de la région de paroi associée (30) du boîtier de soupape (12).

16. Soupape thermostatique selon la revendication 14 ou 15, **caractérisée en ce que** la région de paroi (30) du boîtier de soupape (12) associée au coulisseau de support (33) présente, sur son côté intérieur, des saillies longitudinales (36) faisant saillie vers l'intérieur (25), par exemple des nervures, des ailettes, des baguettes ou similaires, s'étendant dans la direction de déplacement du coulisseau de support (33), le coulisseau de support (33) s'appliquant contre et pouvant être déplacé le long de leur surface tournée vers l'intérieur (25) du boîtier de soupape (12).

17. Soupape thermostatique selon l'une quelconque des revendications 12 à 16, **caractérisée en ce que** la force de pression quelque peu élastique à ressort s'exerce depuis le coulisseau de support (33) par le biais de l'organe de retenue (28) sur le coulisseau plat (22).

18. Soupape thermostatique selon l'une quelconque des revendications 1 à 17, **caractérisée en ce que** le coulisseau plat (22), le coulisseau de support (33) et l'organe de retenue (28) sont assemblés pour former un composant d'une seule pièce en métal ou en plastique.

19. Soupape thermostatique selon l'une quelconque des revendications 1 à 18, **caractérisée en ce que** le coulisseau plat (22), le coulisseau de support (33) et l'organe de retenue (28) forment ensemble un composant approximativement en forme de U.

20. Soupape thermostatique selon l'une quelconque des revendications 1 à 19, **caractérisée en ce que** le coulisseau plat (22) présente une plus grande largeur que le coulisseau de support (33).

21. Soupape thermostatique selon l'une quelconque des revendications 1 à 20, **caractérisée en ce que** le moyen de rappel (19) est formé d'un ressort (37), en particulier d'un ressort à boudin cylindrique, qui comprend le boîtier (14) de l'élément d'actionnement (13) et qui est supporté par une extrémité (38) au niveau de l'organe de retenue (28).

22. Soupape thermostatique selon l'une quelconque des revendications 1 à 21, **caractérisée en ce que** le moyen de rappel (19), en particulier le ressort (37), est supporté par son extrémité (39) opposée au premier organe de fermeture de soupape (16) au niveau d'un organe de support approximativement en forme de nervure (40), qui est traversé avec un jeu de déplacement par le boîtier (14) de l'élément d'actionnement (13) et qui est supporté de manière mobile par les deux extrémités (41, 42) au niveau du boîtier de soupape (12) de telle sorte que l'organe de support (40), lors du positionnement et du montage du boîtier de soupape (12) sur une deuxième partie de boîtier (non illustrée), puisse être soulevé de celle-ci et supporté par celle-ci à l'encontre de l'effet du moyen de rappel (19) dans la direction du premier organe de fermeture de soupape (16) à l'écart du boîtier de soupape (12).

23. Soupape thermostatique selon la revendication 21 ou 22, **caractérisée en ce que** le boîtier de soupape (12) présente, au niveau de l'extrémité inférieure ouverte (43), des saillies orientées vers l'intérieur des deux côtés (44, 45) au niveau desquelles l'organe de support (40) est supporté par les extrémités (41, 42).

24. Soupape thermostatique selon l'une quelconque des revendications 1 à 23, **caractérisée en ce que** le boîtier de soupape (12) présente un corps central (50) essentiellement tubulaire, qui est à chaque fois ouvert au niveau de l'extrémité tubulaire inférieure et de l'extrémité tubulaire supérieure (43, respectivement 51), et contient à l'intérieur (25) un espace d'écoulement central formant l'ouverture de soupape (18) et forme, avec les deux extrémités tubulaires ouvertes (43, 51), des ouvertures d'afflux ou d'écoulement respectives pour le réfrigérant.

25. Soupape thermostatique selon l'une quelconque des revendications 2 à 24, **caractérisée en ce que** le boîtier de soupape (12) porte, au niveau d'un côté du corps (50), le raccord (24) réalisé d'une seule pièce avec celui-ci, faisant saillie par exemple approximativement avec un angle aigu vers le haut.

26. Soupape thermostatique selon la revendication 24 ou 25, **caractérisée en ce que** le corps (50) présente une région centrale (52), qui présente, à l'intérieur, la surface de siège de soupape (53) pouvant être commandée par le premier organe de fermeture de soupape (16), et **en ce que** le corps (50) présente, à la suite de la surface de siège de soupape (53), une portion tubulaire plus étroite (54) avec un canal tubulaire de plus petit diamètre (55) conduisant jusqu'à l'extrémité tubulaire (51).

27. Soupape thermostatique selon l'une quelconque des revendications 1 à 26, **caractérisée en ce que** le corps (50) du boîtier de soupape (12) contient, dans la portion tubulaire plus étroite (54), un dispositif de support (56) contre lequel s'appuie du côté de l'extrémité le piston (15) de l'élément d'actionnement (13).

28. Soupape thermostatique selon la revendication 27, **caractérisée en ce que** le dispositif de support (56) présente une douille essentiellement centrale (57) dans le canal tubulaire (55) avec un logement ouvert en bas (58) pour l'extrémité du piston (15) et au moins une nervure porteuse radiale (59), sur laquelle est maintenue la douille (57) et qui est disposée fixement pour sa part contre le boîtier de soupape (12).

29. Soupape thermostatique selon la revendication 28, **caractérisée en ce que** la douille (57) et l'au moins une nervure porteuse (59) sont réalisées d'une seule pièce et sont formées de manière favorable à l'écoulement.

30. Soupape thermostatique selon la revendication 28 ou 29, **caractérisée en ce que** la douille (57) présente un contour extérieur approximativement similaire à une bouteille.

31. Soupape thermostatique selon l'une quelconque des revendications 28 à 30, **caractérisée en ce que** l'au moins une nervure porteuse (59) présente une largeur principale mesurée dans la direction axiale du canal tubulaire (55) et s'étend sur toute la longueur de la douille (57).

32. Soupape thermostatique selon l'une quelconque des revendications 28 à 31, **caractérisée en ce que** l'au moins une nervure porteuse (59), vue dans la direction axiale du canal tubulaire (55), présente, dans la région centrale, une épaisseur en section transversale plus grande que vers les deux extrémités vers lesquelles l'épaisseur en section transversale diminue par exemple de manière constante.

33. Soupape thermostatique selon l'une quelconque des revendications 27 à 32, **caractérisée en ce que** le dispositif de support (56) présente trois nervures porteuses (59) disposées dans la direction périphérique suivant des écarts angulaires approximativement égaux, de préférence de même conformation.

34. Soupape thermostatique selon l'une quelconque des revendications 1 à 33, **caractérisée en ce que** le boîtier de soupape (12) conjointement avec le dispositif de support (56) constitue un composant d'une seule pièce et est de préférence formé en plastique, par exemple est réalisé sous forme de pièce moulée par injection.
